# EUROPEAN PATENT SPECIFICATION

(11) **EP 0 651 612 B1**
(45) Date of publication and mention of the grant of the patent: **15.01.2003**
(21) Application number: 92905521.8
(22) Date of filing: 13.10.1992
(51) Int. Cl.: A23G 3/30

(54) **IMPROVED WAX-FREE CHEWING GUM BASE**
VERBESSERTE WACHSFREIE KAUGUMMIGRUNDMASSE
BASE DE GOMME A MACHER AMELIOREE DEPOURVUE DE CIRE

(30) Priority: 03.03.1992 WO PCT/US92/01686; 30.06.1992 US 906921
(43) Date of publication of application: 10.05.1995
(73) Proprietor: WM. WRIGLEY JR. COMPANY, Chicago Illinois 60611 (US)
(72) Inventor: SYNOSKY, Steven, Green Brook, NJ (US); REED, Michael A., Merrillville, IN (US)
(74) Representative: Baverstock, Michael George Douglas
(86) International application number: US9208660
(87) International publication number: WO93017571

(56) References cited:
- FR-A- 2 607 671
- US-A- 3 984 574
- US-A- 3 995 064
- US-A- 4 186 214
- US-A- 4 187 320
- US-A- 4 357 355
- US-A- 4 387 108
- US-A- 4 525 363
- US-A- 5 023 093

## Description

The present invention relates to improved chewing gum bases of the type which do not contain wax, and to methods of preparing chewing gum bases which do not contain wax.

Recently, in the United Kingdom, the use of wax, especially mineral hydrocarbon wax, in gum bases, has come under scrutiny. There is a perception in the United Kingdom that it may not be desirable to use wax in gum bases. This perception could result in possible regulatory issues, in the United Kingdom, concerning the use of wax in gum base.

Unfortunately, one cannot merely remove wax from a gum base without possibly compromising certain desirable characteristics of the resulting chewing gum product. Wax provides a number of functions in the gum base. For example, wax can influence the release of flavor from the gum product. Furthermore, wax aids in the curing of the finished gum product that is made from the gum base. Additionally, wax contributes to the shelf-life of the finished gum and its texture.

Although some gum bases are known that do not contain wax, they, the inventor believes, typically do not have the chew characteristics, in addition to other characteristics, of typical chewing gums that are created from wax containing gum bases. Heretofore, gum bases without wax were not created in response to any regulatory concerns, but rather, were merely created as part of bases to achieve other ends, for example, a non-tack gum. Therefore, in certain instances, compromises with respect to certain characteristics may have been made to achieve other results, e.g., non-tack, reduced calories, etc.

U.S. Patent 3,984,574, issued to Comollo, discloses an abhesive chewing gum base in which the non-tack properties were achieved by eliminating conventional chewing gum base ingredients which were found to contribute to chewing gum tackiness, and by substituting non-tacky ingredients in place of the conventional ingredients. Specifically, it was discovered that three classes of materials account for conventional chewing gum tackiness. These materials are elastomers, resins, and waxes.

In US-A-5023093, there is disclosed a chewing gum base with reduced calorie content. The central components of that gum base are 10-25% polyvinyl acetate having a medium molecular weight of about 35,000 to 55,000, 4.5% to about 10% acetylated monoglyceride.

In US-A-4387108, there is described a non-adhesive chewing gum composition which does not adhere to dentures, fillings or natural teeth consisting essentially of an elastomer, at least one emulsifier including lecithin, lecithin deriviatives, or mixtures thereof 0.5 to 0.6%, an elastomer solvent, including the glyceryl ester of partially hydrogenated wood rosin 2.5 to 8%, as well as one or more mineral adjuvants, an non-toxic vinyl polymer and at least one oleaginous plasticizer, including waxes.

Comollo eliminated natural and some synthetic elastomer from the chewing gum base, and substituted in their place one or more non-tacky synthetic elastomers such as polyisobutylene, polyisoprene, isobutylene-isoprene copolymer and butadiene-styrene copolymer. Comollo also eliminated the tack-producing natural resins and modified natural resins and used instead relatively high amounts of hydrogenated or partially hydrogenated vegetable oils or animal fats. Finally, Comollo completely excluded waxes from the gum base, but included polyvinyl acetate, fatty acids, and mono and diglycerides of fatty acids.

There is therefore a need for a method for removing wax from gum bases without compromising the characteristics of the resultant gum. Likewise, there is a need for a gum base not having wax, but exhibiting the characteristics of gum bases that do include wax.

The present invention is directed to a wax-free chewing gum base and method of making same. The gum base of the invention includes quantities of elastomer (synthetic, natural, or both), elastomer plasticizer, filler and softener, and is substantially free of wax. The gum base of the invention may also contain optional quantities of minor ingredients such as color and antioxidant.

In accordance with the present invention there is provided a wax-free chewing gum base comprising:
from 20 to 60 wt% synthetic elastomer;
from 0 to 30 wt% natural elastomer;
from 5 to 55 wt% elastomer plasticizer;
from 4 to 35 wt% filler; and
from 5 to 35 wt% softener;
the softener comprising one or more hydrogenated or partially hydrogenated vegetable oil or a mixture thereof having a capillary melting point from 40°C to 70°C, the amount of said oil or mixture thereof being from 12 to 35 wt% based on the weight of the gum base.

In accordance with a further aspect of the invention there is provided a method for eliminating wax from a gum base formula containing more than 5 wt% wax and at least one elastomer, elastomer solvent and softener comprising the steps of:
eliminating wax from the formula and including approximately proportionately an amount of at least one hydrogenated or partially hydrogenated vegetable oil or a mixture thereof;
mixing the elastomer, elastomer solvent, softener and vegetable oil to form a base;
testing a resultant base; and
modifying the vegetable oil ratios and/or vegetable oil content of the resultant gum base to produce the desired characteristics of the resultant base, the amount of softener and vegetable oils in the resultant base being from 5 to 35 wt%.

In accordance with the present invention there is provided use of hydrogenated, partially hydrogenated vegetable oils or a mixture of hydrogenated and partially hydrogenated vegetable oils as a substitute for wax in chewing gum base to produce a wax free gum base.

In an embodiment, the use of natural elastomers in the gun base compliments certain chewing gum flavors, such as mint oil, by rounding out the otherwise harsh or grassy notes in the flavor. The presence of natural elastomers and natural resins in the gum base also contributes to improved chewing gum texture and flavor retention. There is currently a need or desire in at least part of the chewing gum industry for gum bases which are devoid of wax and which when used to make chewing gum, exhibit the chew characteristics of a chewing gum made from a wax containing base.

Additionally, the present invention provides a method for eliminating wax from a gum base while retaining the desirable characteristic of a chewing gum having wax. Pursuant to the present invention, a method is provided for eliminating wax from a gum base that includes quantities of an elastomer, elastomer plasticizer, and softener. Pursuant to an embodiment of the method of the present invention, the wax is eliminated from the gum base formula and the oils, that comprise, at least in part, the softener, are increased sufficiently to compensate for the removal of the wax and thereby achieve a gum base that can create a chewing gum having chew properties, including release of flavor, at least as good as gums based on wax bases. It has been found that by selecting the oil content so as to create a gum base that has a lower softening point than a similar gum base containing wax, improved flavor release can be achieved.

In an embodiment, the selection of the elastomer plasticizer, and specifically the melting point of same, is used, at least in part, to compensate for the removal of the wax.

In an embodiment, the oil substantially comprises hydrogenated oils.

In an embodiment, a wax free gum base is provided comprising: an elastomer; polyvinyl acetate; an elastomer plasticizer; and a sufficient amount of oils having melting points from 40°C to 70°C to enhance the flavor release of a gum product made from the base.

In an embodiment, the oils comprise principally hydrogenated oils having melting points of 60-70°C.

It is an advantage of the invention to provide a substantially wax-free chewing gum base.

It is also an advantage of the invention to provide a suitably soft gum base in which wax is not needed to soften the gum base.

It is an advantage of an embodiment of the invention to improve the compatibility of gum base ingredients during the blending process, since no wax is present to cause incompatibility.

It is an advantage of the invention to provide an improved chewing gum which contains the wax-free chewing gum base of the invention.

It is an advantage of one embodiment of the invention to provide an improved chewing gum made from the wax-free base which does not retain the amount of flavor typical sugarless gums retain after thewing.

It is an advantage of one embodiment of the invention to provide an improved chewing gum that hydrates better during about one to three minutes of chewing.

It is an advantage of one embodiment of the present invention to provide a method for eliminating wax from a gum base and still provide a gum base that can create a resultant gum product having the characteristics of a gum product that includes wax.

It is an advantage of one embodiment of the present invention to provide a wax free gum base that can be used to create a chewing gum that has chew characteristics at least as good as chewing gum created from wax containing gum bases.

It is an advantage of one embodiment of the present invention to provide a gum base that is free of wax but when used to create a chewing gum has improved flavor release.

The foregoing and other features and advantages will become further apparent from the following detailed description of the presently preferred embodiments, when read in conjunction with the accompanying examples. It should be understood that the detailed description and examples are illustrative rather than limitative, the scope of the present invention being defined by the appended claims and equivalents thereof.

In accordance with the invention, a chewing gum base is provided for use in either non-tack or conventional chewing gum, which may be either bubble gum or regular chewing gum. In an embodiment, the chewing gum base of the invention contains from 20 to 60 weight percent synthetic elastomer, from 0 to 30 weight percent natural elastomer, from 5 to 55 weight percent elastomer plasticizer, from 4 to 35 weight percent filler, from 5 to 35 weight percent softener, and optional minor amounts (about one percent or less) of miscellaneous ingredients such as colorants, antioxidants, etc.

Synthetic elastomers may include, but are not limited to, polyisobutylene with GPC weight average molecular weight of from 10,000 to 95,000, isobutylene-isoprene copolymer (butyl elastomer), styrene-butadiene copolymers having styrene-butadiene ratios of from 1:3 to 3:1, polyvinyl acetate having GPC weight average molecular weight of from 2,000 to 90,000, polyisoprene, polyethylene, vinyl acetate-vinyl laurate copolymer having vinyl laurate content of from 5 to 50 percent by weight of the copolymer, and combinations thereof.

Preferred ranges are, for polyisobutylene, 50,000 to 80,000 GPC weight average molecular weight, for styrene-butadiene, 1:1 to 1:3 bound styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is abhesive or conventional, bubble gum or regular gum, as discussed below. The preferred natural elastomers are jelutong, chicle, sorva and massaranduba balata.

Elastomer plasticizers may include, but are not limited to, natural rosin esters such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. The preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, fatty acids (e.g. stearic, palmitic, oleic and linoleic acids), and combinations thereof. Hydrogenated vegetable oils are generally preferred, either alone or in combination with other softeners. As discussed in detail below, the selection and amount of oils has been determined to, at least with respect to certain bases and at least in part, compensate for the removal of wax.

Colorants and whiteners may include FD&C-type dyes and lakes, fruit and vegetable extracts, titanium dioxide, and combinations thereof.

When the wax-free gum base of the invention is to be used in a regular (non-bubble) gum which has at least some abhesive (reduced tack) characteristics, the base should preferably contain from 10 to 40 weight percent synthetic elastomer, from 15 to 30 weight percent elastomer plasticizer, from 5 to 30 weight percent filler, from 15 to 35 weight percent softener, from 0 to 1 weight percent colorant and from 0 to 0.1 weight percent antioxidant. By way of example, specific embodiments of the wax-free gum base are provided in Examples 1-30 below.

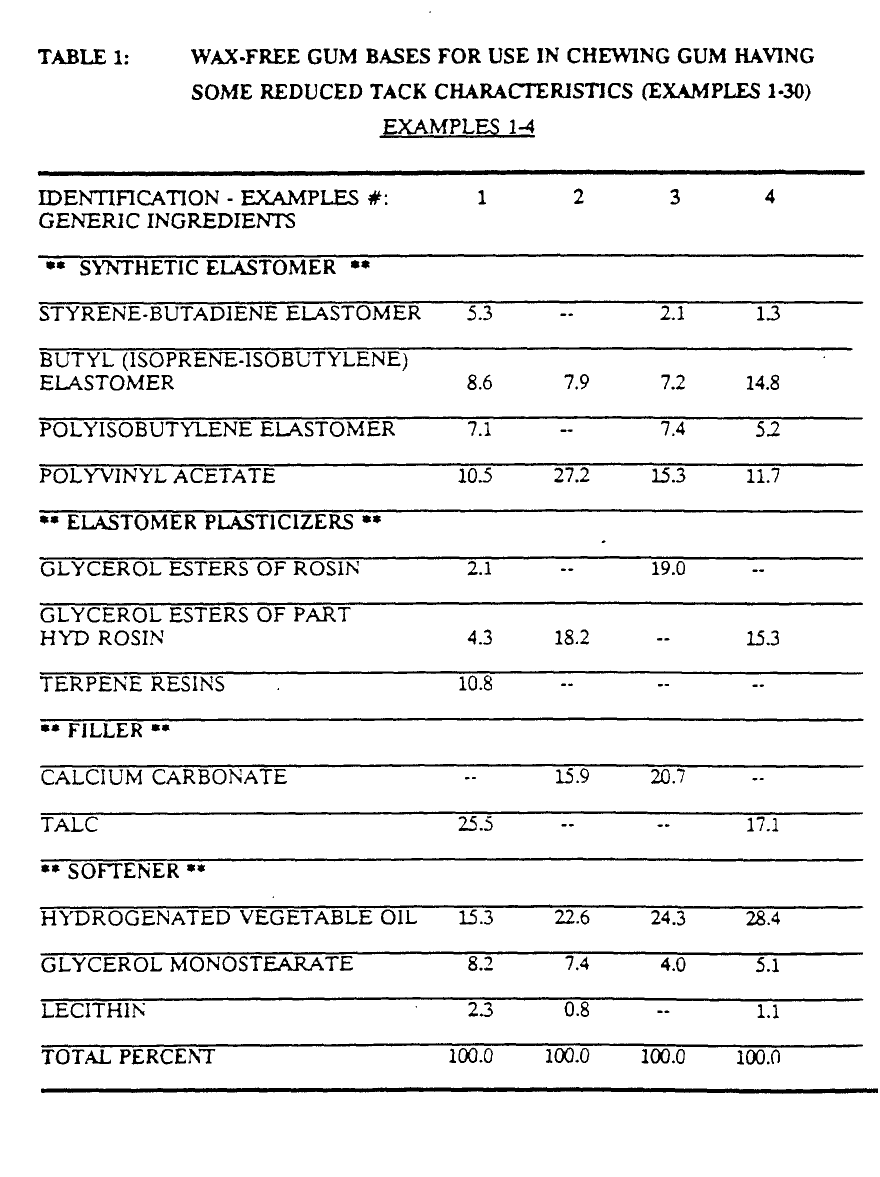

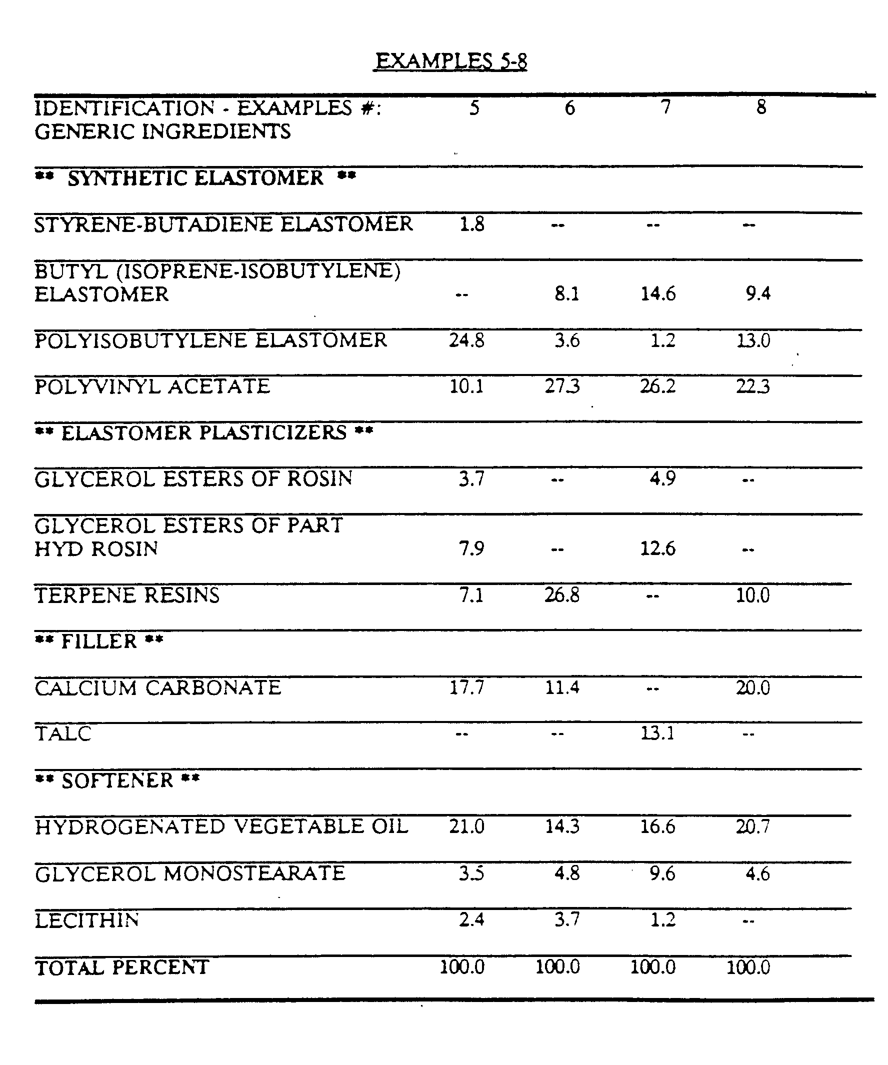

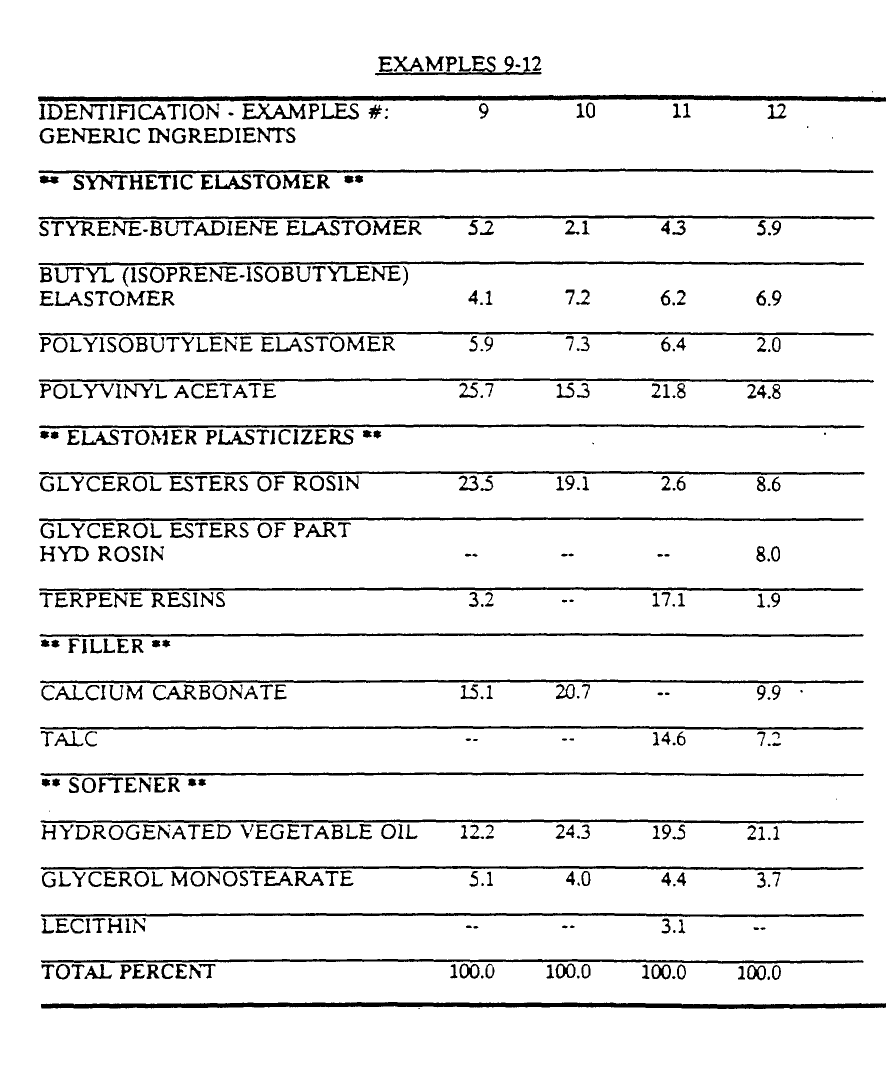

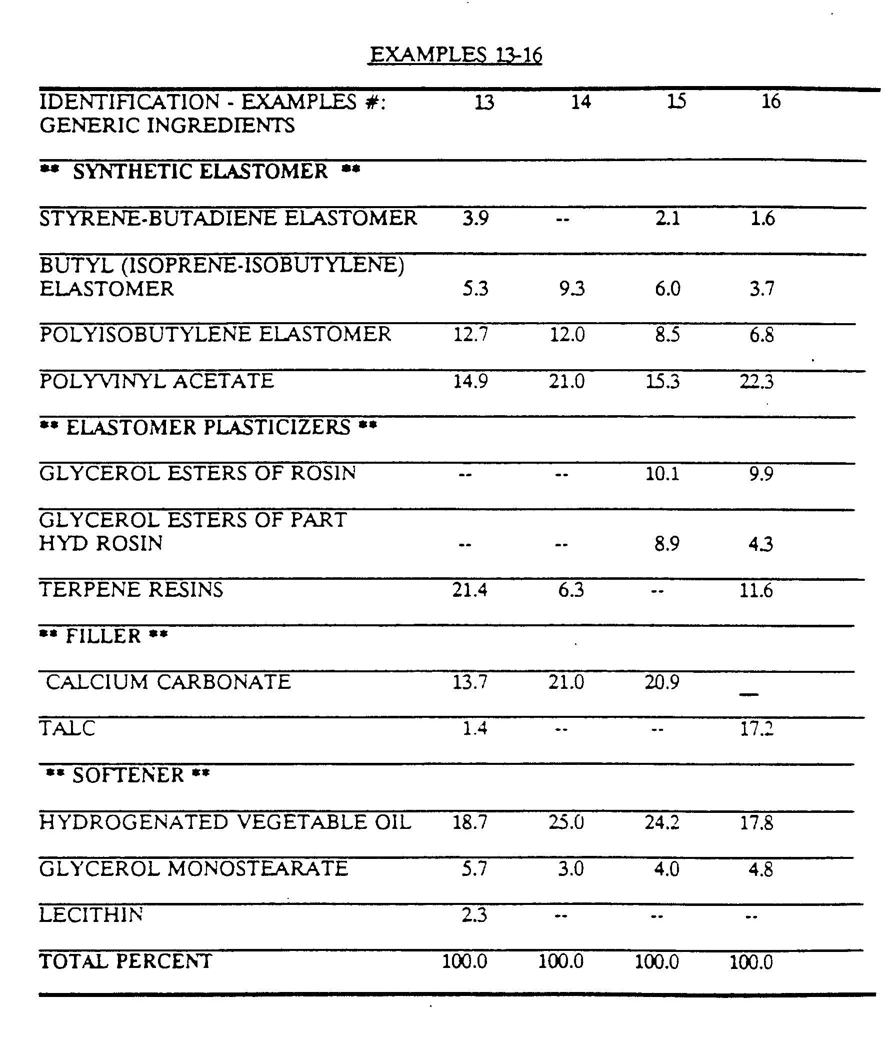

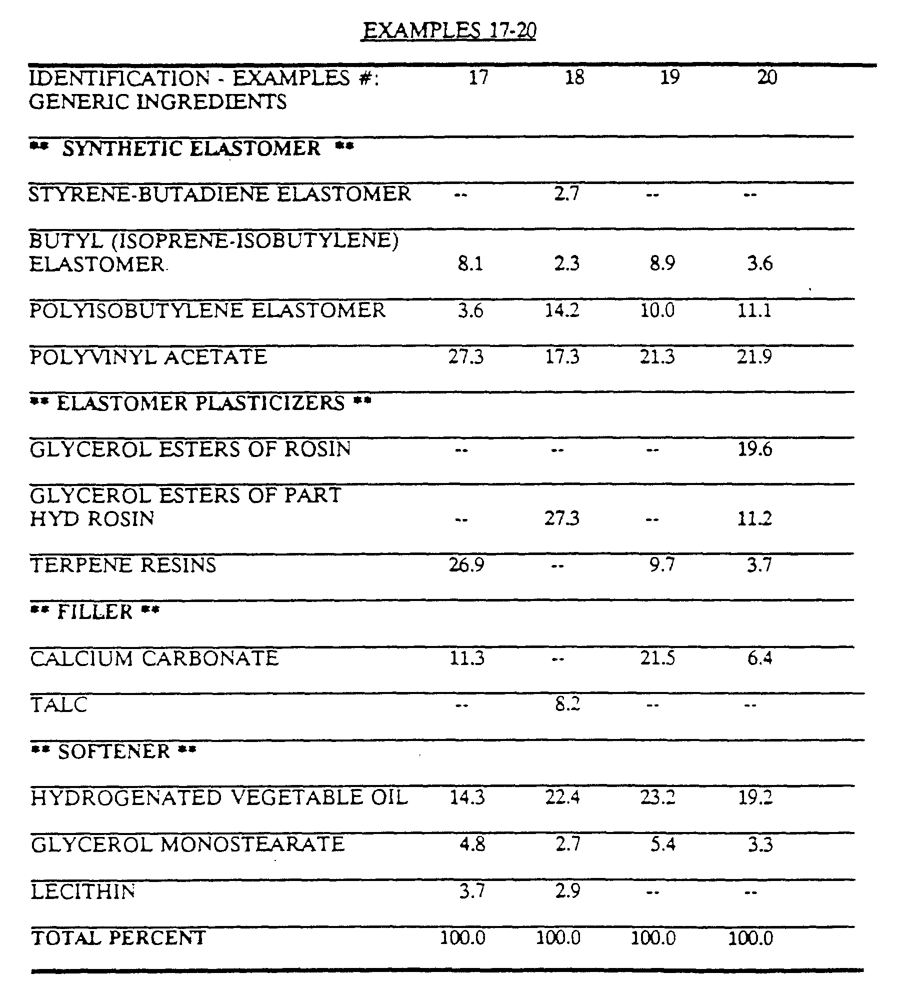

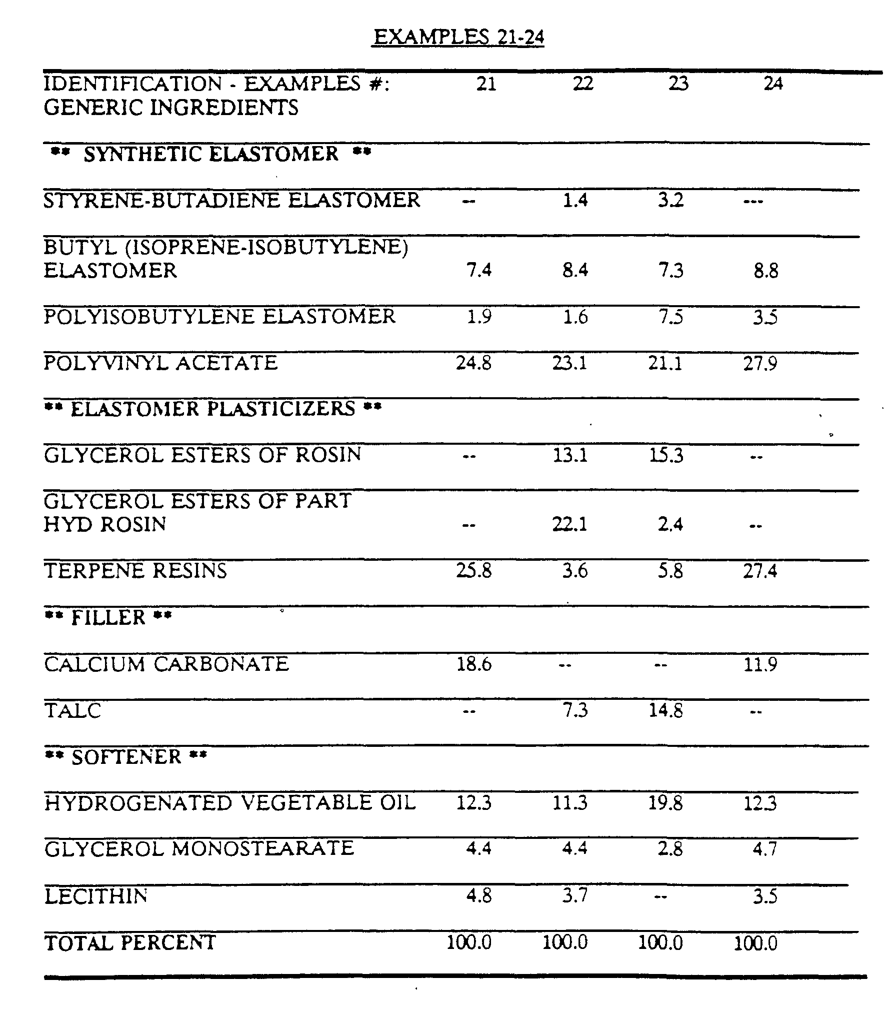

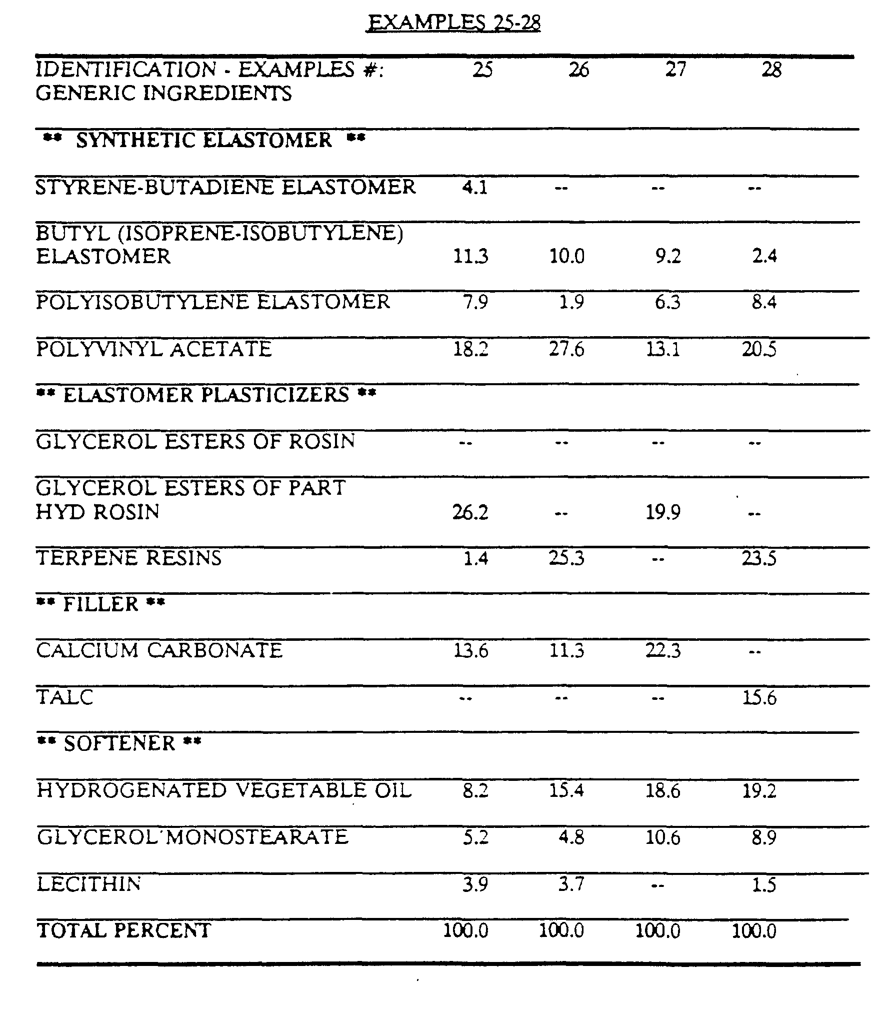

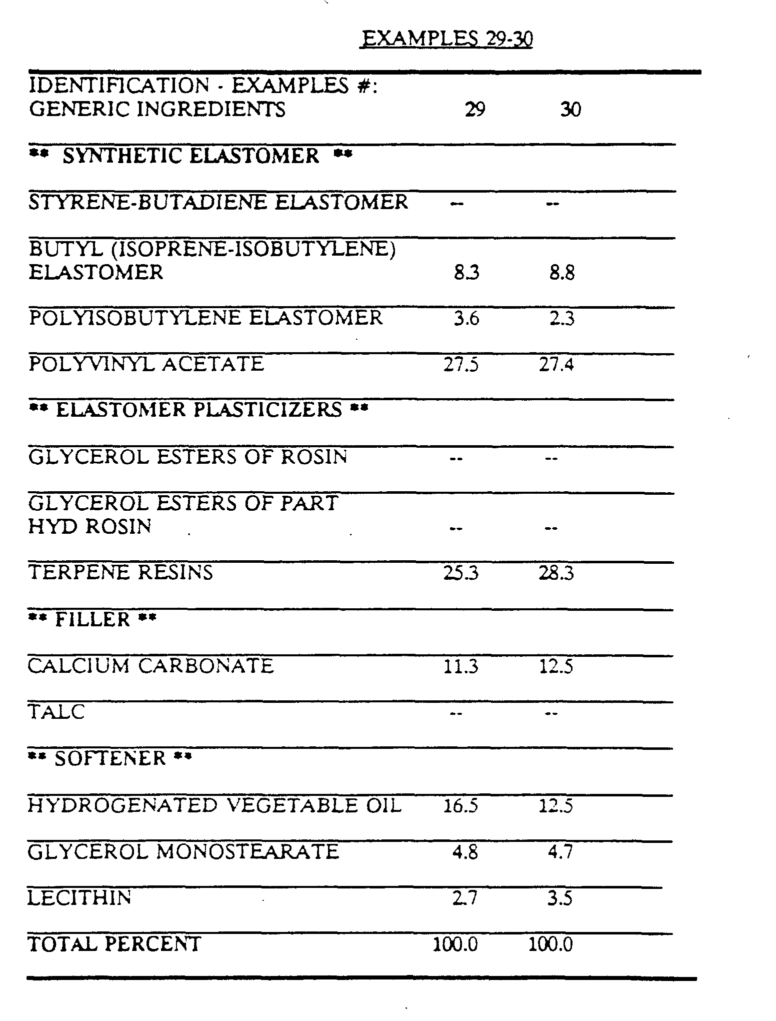

When the wax-free gum base of the invention is to be used in a regular (non-bubble) gum which does not have abhesive characteristics, the base should preferably contain from 12 to 30 weight percent natural elastomer, from 20 to 40 weight percent synthetic elastomer, from 4 to 25 weight percent elastomer plasticizer, from 5 to 25 weight percent filler, from 15 to 30 weight percent softener, from 0 to 0.1 weight percent colorant and from 0 to 0.1 weight percent antioxidant. By way of example, specific embodiments of the wax-free gum base fitting this description are provided in Examples 31-55 below:

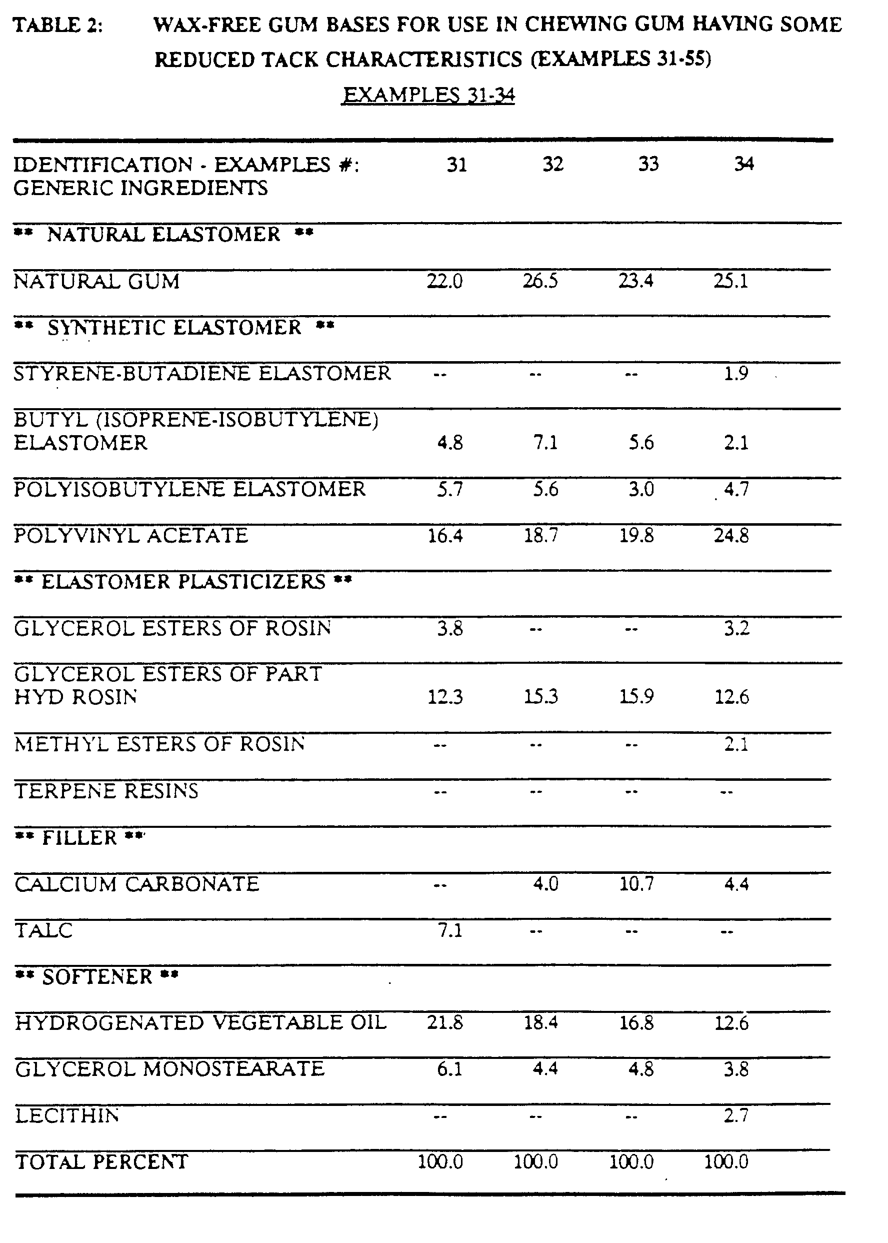

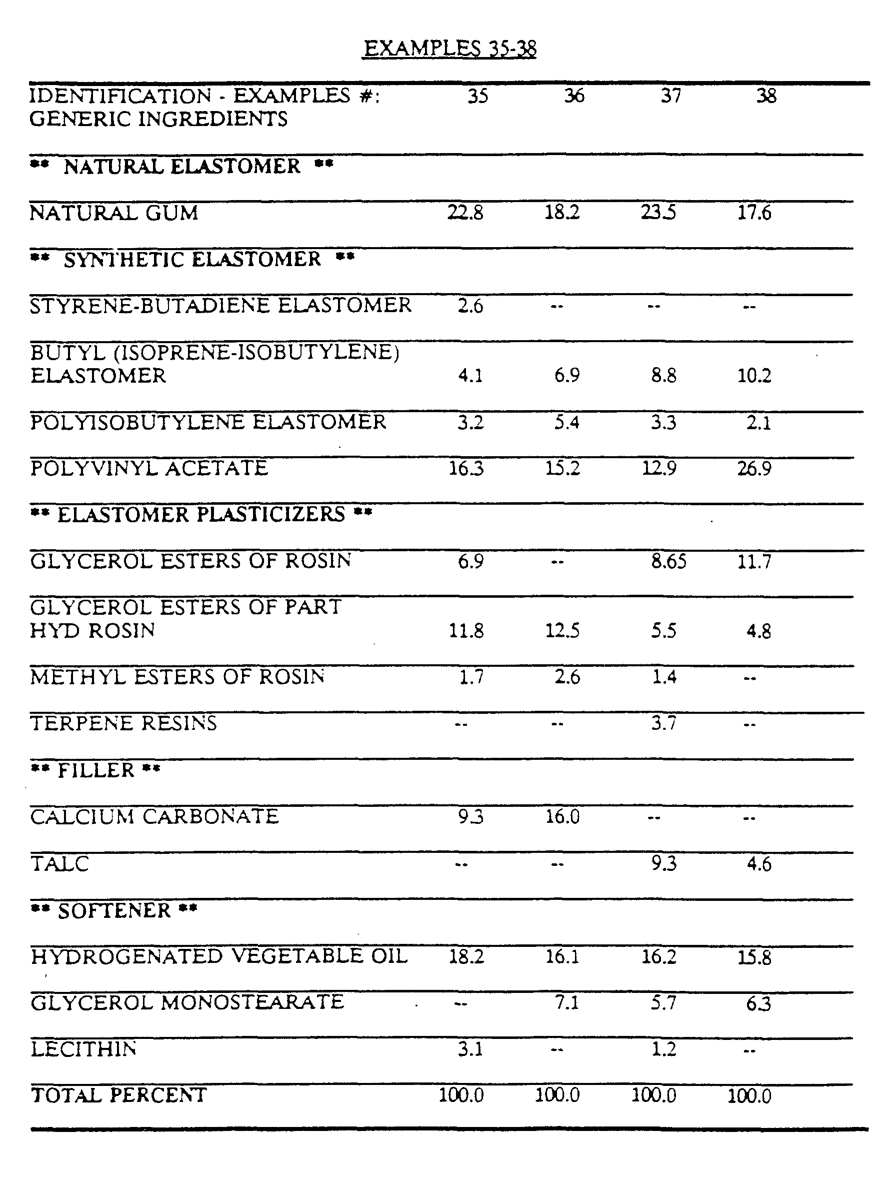

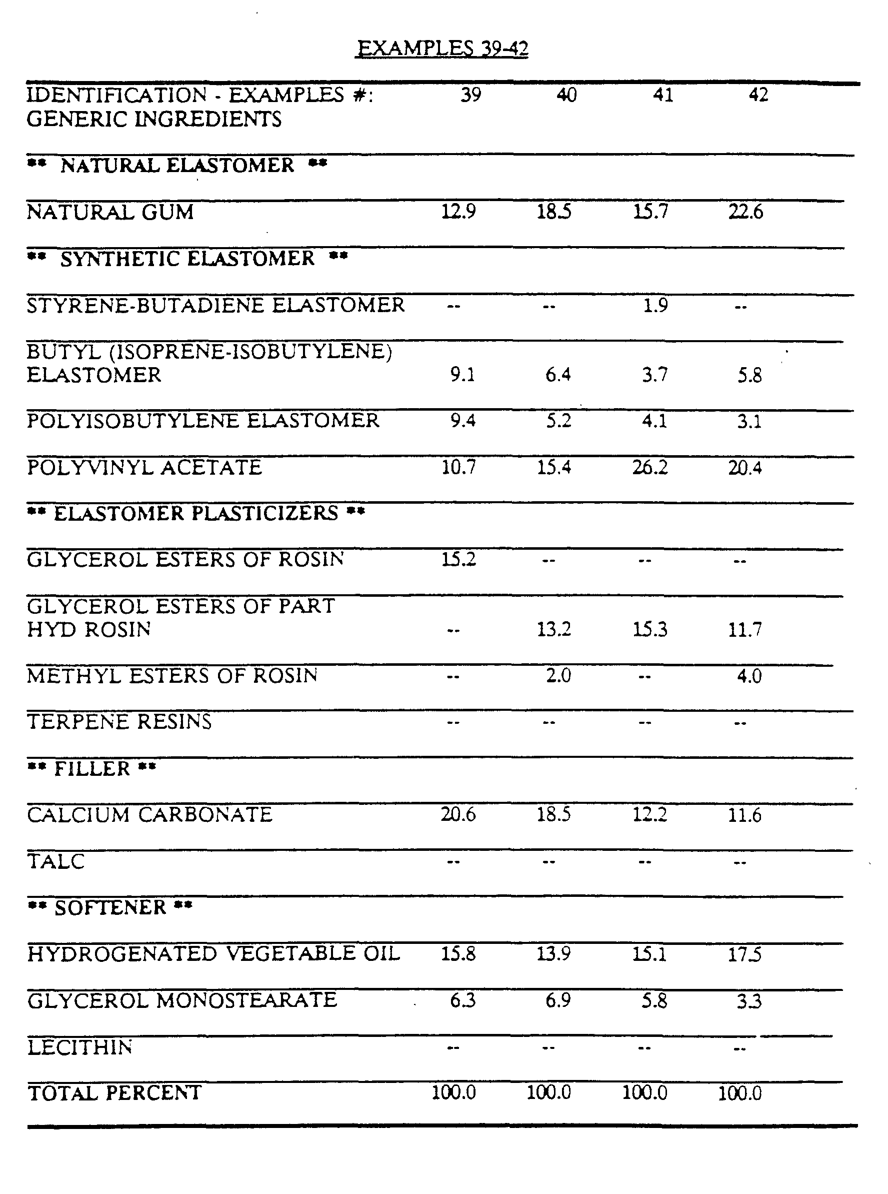

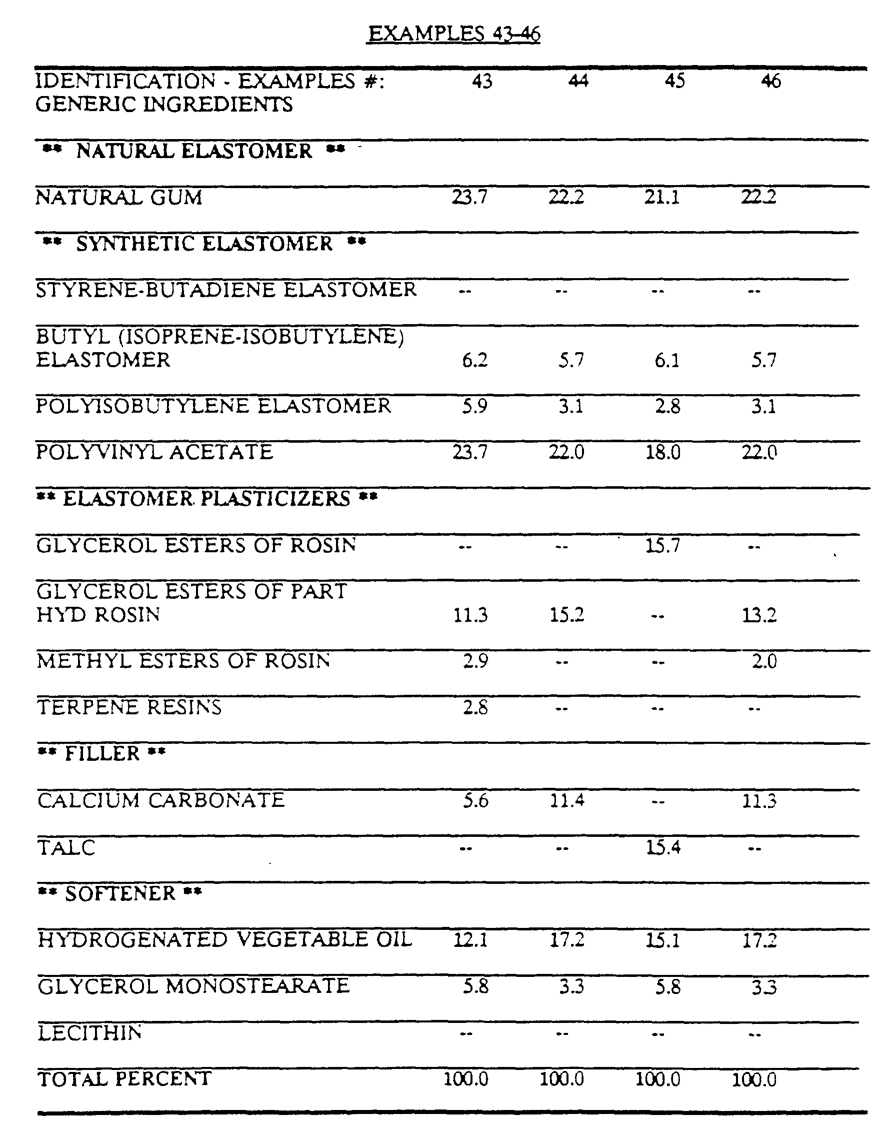

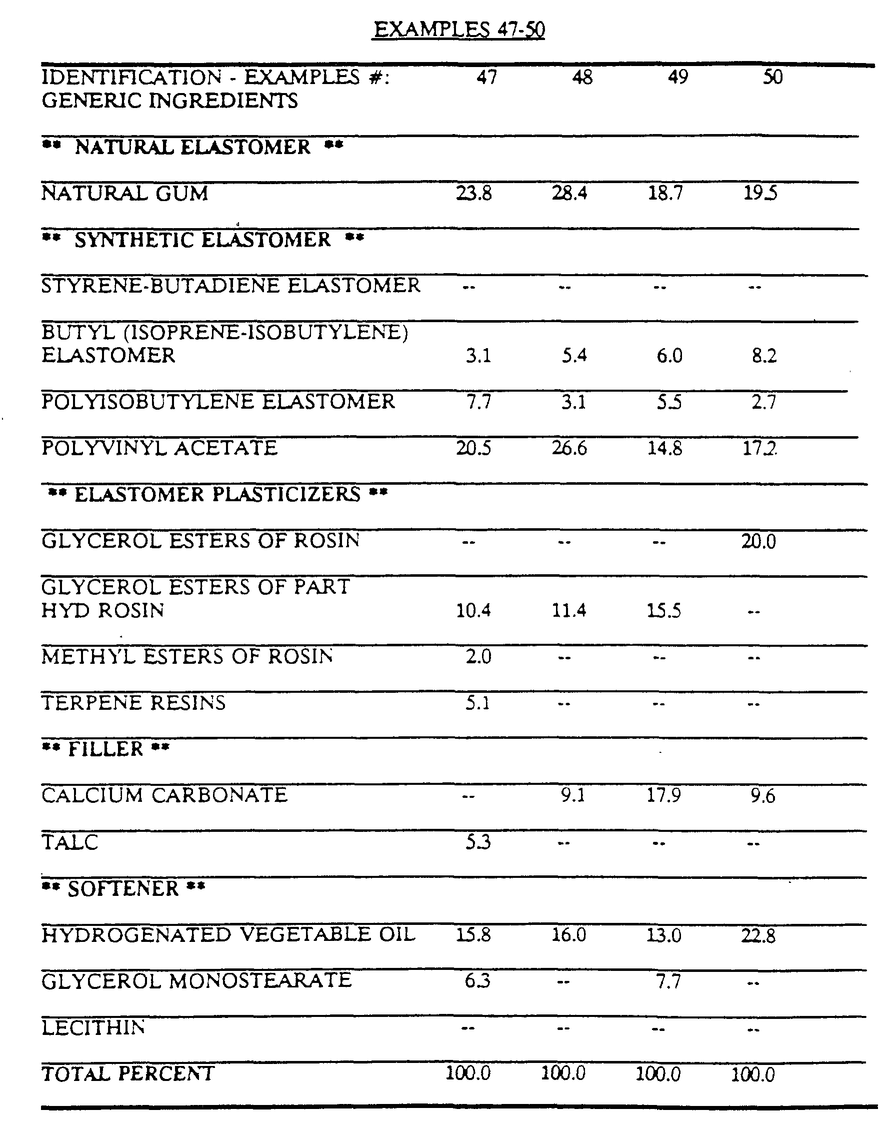

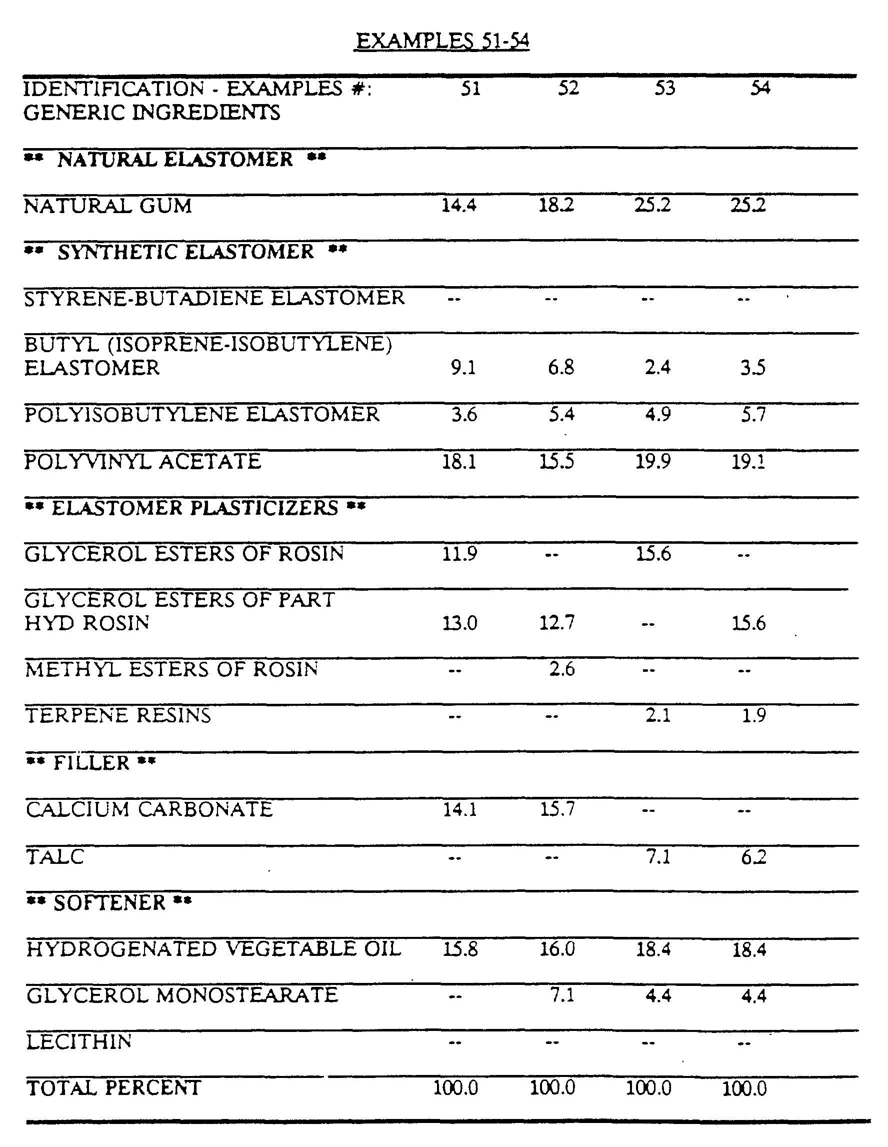

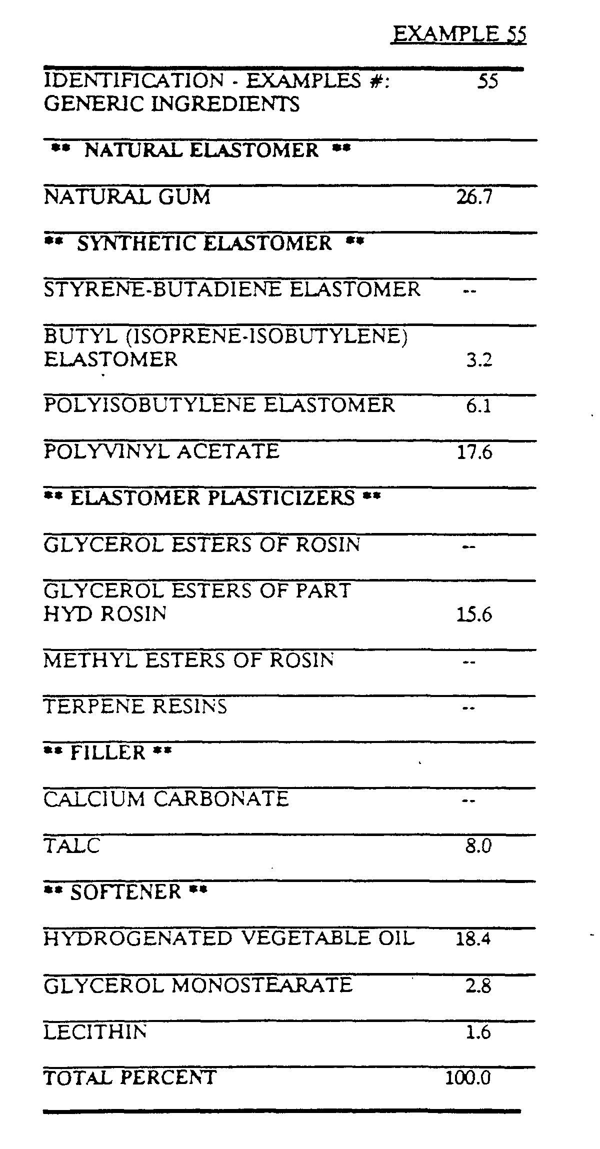

When the wax-free gum base of the invention is to be used in a bubble gum, the base should preferably contain from 30 to 60 weight percent synthetic elastomer, from 5 to 55 weight percent elastomer plasticizer, from 10 to 35 weight percent filler, from 5 to 25 weight percent softener, from 0 to 1 weight percent colorant and from 0 to 0.1 weight percent antioxidant.

The wax-free gum base of the invention constitutes from 5 to 95 weight percent of the chewing gum, more typically 10 to 50 weight percent of the chewing gum, and most commonly 20 to 35 weight percent of the chewing gum. The gum base is typically prepared by adding an amount of the elastomer, elastomer plasticizers and filler to a heated sigma blade mixer with a front to rear blade speed ratio of typically 2:1. The initial amounts of ingredients are determined by the working capacity of the mixing kettle in order to attain a proper consistency. After the initial ingredients have massed homogeneously, the balance of the elastomer plasticizer, filler, softeners, etc. are added in a sequential manner until a completely homogeneous molten mass is attained. This can usually be achieved in one to four hours, depending on the formulation. The final mass temperature can be between 60°C and 150°C, more preferably between 80°C and 120°C. The completed molten mass is emptied from the mixing kettle into coated or lined pans, extruded or cast into any desirable shape and allowed to cool and solidify.

Although the above method for making base is typical and applies to both chewing and bubble bases, it has been found that there is a preferred method for making the bubble bases described in this invention.

First, all of the polyvinyl acetate and portions of the polyisobutylene and filler are added and blended in a heated sigma blade mixer. Softeners such as glyceryl triacetate are then added along with a second portion of each of polyisobutylene and filler.

Next, the rest of the polyisobutylene and filler are added along with the elastomer plasticizer. Finally, the remaining ingredients such as glycerol monostearate and antioxidants may be added. Colorant may be added at any time during the mixing process and is preferably added at the start.

There are some variations to the above described preferred method which in no way limit the method as described. Those skilled in the art of gum base manufacture may be able to appreciate any minor variations.

In producing wax-containing gum bases high in polyvinyl acetate, and particularly those high in high molecular weight polyvinyl acetate, it is necessary to improve blending of the ingredients by removing the heat applied to the sigma blade mixer at some point in the process. This reduces the temperature of the gum base and causes greater compatibility of its ingredients. In the inventive gum base process for making the inventive gum base free of wax, there is no need to remove the heat applied. The degree of incompatibility is greatly reduced since there is no wax present.

In addition to the water-insoluble gum base, a typical chewing gum composition includes a water soluble bulk portion and one or more flavoring agents. The wax-free gum base of the invention can be used with any typical chewing gum composition.

The water soluble portion of the chewing gum may include softeners, bulk sweeteners, high intensity sweeteners, flavoring agents and combinations thereof. Softeners are added to the chewing gum in order to optimize the chewability and mouth feel of the gum. The softeners, which are also known as plasticizers or plasticizing agents, generally constitute from 0.5 to 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners constitute from 5 to 95% by weight of the chewing gum, more typically 20 to 80% by weight of the chewing gum and most commonly 30 to 60% by weight of the chewing gum. Bulk sweeteners may include both sugar and sugarless sweeteners and components. Sugar sweeteners may include saccharide containing components including but not limited to sucrose, dextrose, maltose, dextrin, dried invert sugar, fructose, levulose, galactose, corn syrup solids, and the like, alone or in combination. Sugarless sweeteners include components with sweetening characteristics but are devoid of the commonly known sugars. Sugarless sweeteners include but are not limited to sugar alcohols such as sorbitol, mannitol, xylitol, hydrogenated starch hydrolysates, maltitol, and the like, alone or in combination.

High intensity sweeteners may also be present and are commonly used with sugarless sweeteners. When used, high intensity sweeteners typically constitute from 0.001 to 5% by weight of the chewing gum, preferably from 0.01-1% by weight of the chewing gum. Typically, high intensity sweeteners are at least 20 - times sweeter than sucrose. These may include but are not limited to sucralose (Trade Mark), aspartame, salts of acesulfame, alitame, saccharin and its salts, cyclamic acid and its salts, glycyrrhizin, dihydrochalcones, thaumatin, monellin, and the like, alone or in combination.

Combinations of sugar and/or sugarless sweeteners may be used in chewing gum. The sweetener may also function in the chewing gum in whole or in part as a water soluble bulking agent. Additionally, the softener may also provide additional sweetness such as with aqueous sugar or alditol solutions.

Flavoring agents should generally be present in the chewing gum in an amount within the range of from 0.1 to 15% by weight of the chewing gum, preferably from 0.2 to 5% by weight of the chewing gum, most preferably from 0.5 to 3% by weight of the chewing gum. Flavoring agents may include essential oils, synthetic flavors or mixtures thereof including but not limited to oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

Optional ingredients such as colors, emulsifiers, pharmaceutical agents and additional flavoring agents may also be included in chewing gum.

Chewing gum is generally manufactured by sequentially adding the various chewing gum ingredients to any commercially available mixer known in the art. After the ingredients have been thoroughly mixed, the gum mass is discharged from the mixer and shaped into the desired form such as by rolling into sheets and cutting into sticks, extruding into chunks, or casting into pellets. Generally, the ingredients are mixed by first melting the gum base and adding it to the running mixer. The gum base may alternatively be melted in the mixer. Color and emulsifiers can be added at this time.

A softener such as glycerin can be added next along with syrup and part of the bulk portion. Further parts of the bulk portion may then be added to the mixer. Flavoring agents are typically added with the final part of the bulk portion. The entire mixing process typically takes from five to fifteen minutes, although longer mixing times are sometimes required. Those skilled in the art will recognize that variations of this mixing procedure, or other mixing procedures, may be followed.

Pursuant to the present invention, methods are provided for eliminating the wax from a gum base yet still providing a gum base that yields a gum having desirable characteristics. Of course, a great number of gum bases are known, many of which have been, or are, commercial products. The inventor believes that the great majority of these bases are wax containing. Indeed, it is further believed that there are only a few specialized formulas that do not contain wax; these formulas having been modified to achieve certain properties at the expense of certain desirable properties that are typically present in a wax containing gum and therefore do not provide a wax-free gum base that can be used to create a gum having characteristics as good as or better than a gum including wax. It would therefore be desirable to provide a method for creating a wax free product in those situations where public perception or regulatory requirements make a wax-free base necessary and/or desirable.

The inventor has found that one method for eliminating wax from a gum base is to eliminate the wax from the typical formula and increase the proportion of at least select oils in the base sufficiently to compensate for the removal of the wax. It is not necessary for a one to one correspondence to be made with respect to the amount of wax deleted and the proportion of oil increased. Rather, in order to afford the necessary characteristics to the resultant gum, the amount and type of oils chosen are selected to create a composition that has chew characteristics, including flavor release, as good as a wax based gum.

More specifically, in an embodiment of the method and composition of the present invention, the amount of and the capillary melting point (CMP) of the oil component are chosen so that the resultant no wax gum base has a softening point lower than that of a corresponding wax containing gum base. The softening point of the base is determined by using ASTM method E28-58T modified whereby the gum base sample is softened in an oven and molded into a shouldered brass ring and trimmed. The sample is placed in a water and glycerine bath and adjusted to a temperature rise of 1°C ±0.25°C per minute.

By so choosing the oils and reducing the softening point of the base, this provides for a better release of the flavors. It has been found that preferably the oils have a CMP of from 40°C to 70°C. Preferably, the oils comprise substantially hydrogenated oils. Preferred hydrogenated oils include cottonseed oil (60 to 65°C) and soybean oil (65 to 70°C). However, other oils can also be used such as canola, safflower, sunflower, palm, and coconut. It has been found that preferably when hydrogenated oils are used, the oils comprise at least 12% by weight of the gum base.

Partially hydrogenated oils can be used in conjunction with the hydrogenated oils. Preferably, the partially hydrogenated oils have melting points of 45 to 50°C. In an embodiment, preferably the partially hydrogenated oils are used at 10% or less with respect to the total content of the base.

As used herein, the term "oil" is used broadly and includes hydrogenated oils and those products that technically may be classified as fats.

Additionally, it has been found that the selection of the elastomer plasticizer can contribute and improve the characteristics of a gum base product when the wax is removed. In this regard, the ring and ball softening points (R&B SP) of the elastomer plasticizer may also be important with respect to a no wax product. Preferably, in an embodiment of the no wax gum base of the present invention, the elastomer plasticizer has a R&B SP of from 60°C to 135°C. Such elastomer plasticizers include: dimerized rosin ester (80 to 130°C); glycerol ester of rosin (80 to 90°C); glycerol ester of partially hydrogenated rosin (75 to 90°C); and terpene resin (80 to 130°C).

Pursuant to the present invention, a method is provided for removing the wax from a typical wax containing gum base formula. To this end, in an embodiment, when the gum base from which the wax is to be removed originally contains approximately 5% or less wax, in the initial step in the process, the wax is removed from the formula and the other components are increased proportionately. It is not necessary that each component be increased, or that each component be increased to the exact same extent. Rather, at least the majority of the components are increased, and preferably proportionately.

After the reformulation of the gum base, the resultant gum base is then tested. To this end, the gum base can be tested to determine its physical properties, e.g., rheology, to determine if those properties are at least substantially similar to the original wax containing gum base. If desired, the gum base can be used to create a chewing gum. The chewing gum can then be tested to determine if it has chew characteristics that are sufficiently close to, if not better, than a control (a gum created from the original gum base containing wax).

If it is found that the resultant gum does not have sufficiently good chew characteristics, or if the physical properties of the gum base are not satisfactory, then the percent of oil in the gum base is modified. In an embodiment, the percent of oil is not initially modified, but rather, the melting point of the oil is modified. For example, the melting point is increased by adding oils that have a higher melting point and reducing the oils that have a lower melting point. Again, the resultant gum base is tested or a chewing gum is created from the base and the chew characteristics of the gum are tested.

If the gum base, or the chew characteristics of the gum, are still not satisfactory, then further modifications can be made to the percent of oil and/or the melting point of the oil in the gum base. As a further step, the melting point of the elastomer plasticizer in the wax-free base can be modified. It has been found that the melting point of the elastomer plasticizer in the gum base contributes to the chew characteristics. Utilizing these steps, one should be able to eliminate the wax from a gum base without compromising the chew characteristics.

If the gum base originally contains approximately 5% or greater wax content, then the initial step in the process is preferably to eliminate the wax and to increase the oil content proportionately. As previously stated, it is not necessary that the oils be increased in a proportion that corresponds exactly to the original wax content. Rather, the oils are at least increased so as to substantially make up for the elimination of the wax portion. The resultant gum base is then either tested or can then be used to create a chewing gum that is then compared to the control to determine its chew characteristics.

If the characteristics of the resultant gum base are not satisfactory, then the melting point of the oil is modified slightly. Again, to achieve an increase in the melting point in the oil, the oils having a higher melting point, for example, soybean. are increased and the oils having a lower melting point, for example, cotton-seed oil, are reduced.

The gum base is again tested. If it is found that the gum base does not provide satisfactory characteristics, then the melting point of the oil can be further modified.

As an alternative, the proportion of the oil contained in the base can be modified.

If a satisfactory chewing gum base is not created through the step of modifying the melting point of the oil, then the melting point of the elastomer plasticizer is modified.

By using this method, wax can be removed from a gum base that originally contains approximately 5% or greater wax and a wax free gum base can be created that can be used to make a chewing gum having chew characteristics as good as, if not better than, a gum created from a gum base containing wax.

By way of example, and not limitation, examples of wax containing gum bases (controls) are compared to no wax bases that were reformulated from the control formulas pursuant to the present invention will now be given:

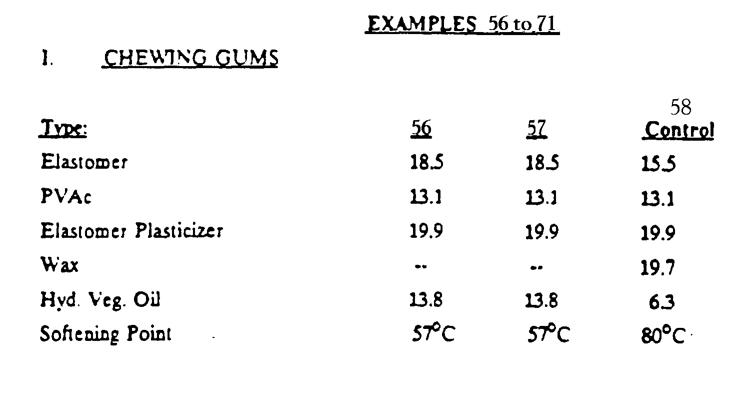

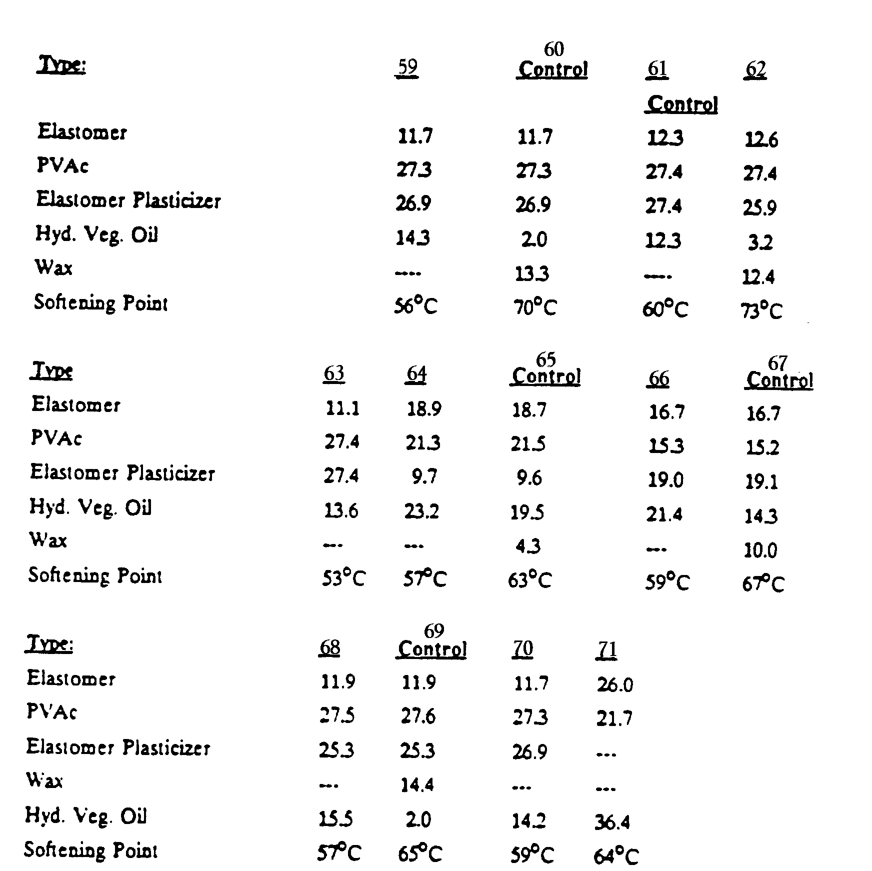

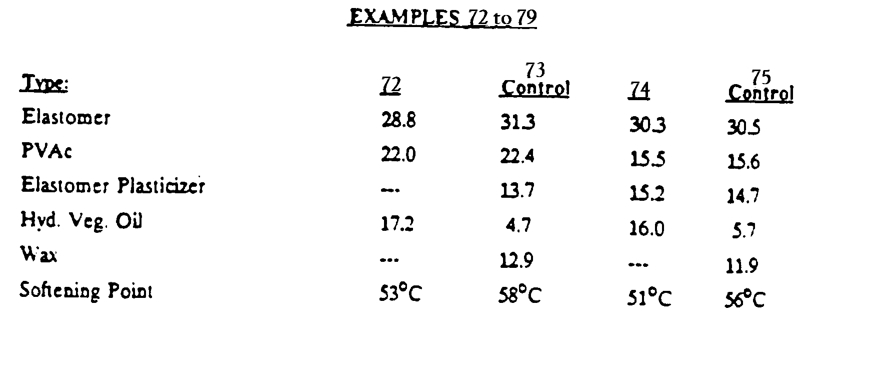

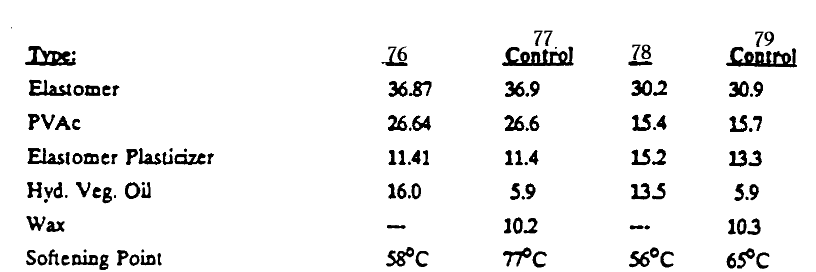

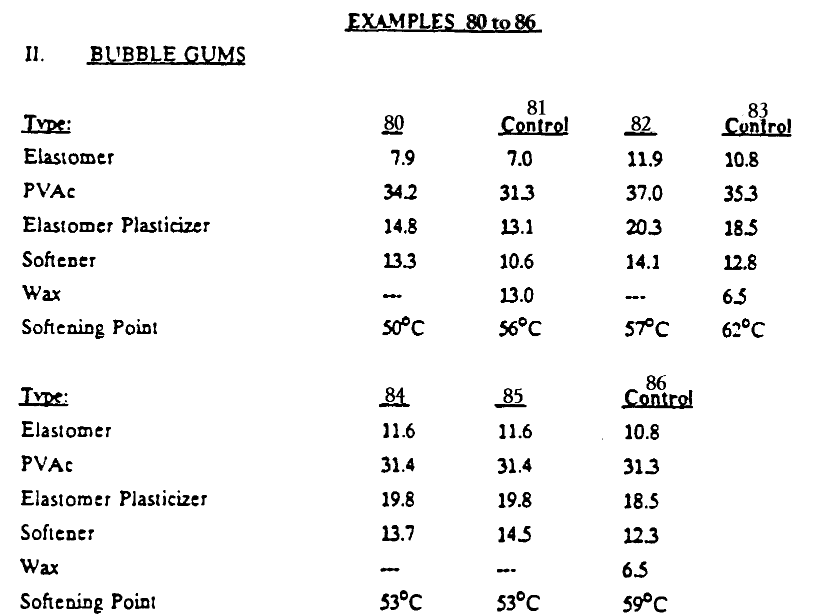

It has been found that with at least some current commercial bases, the wax can be removed without compromising the chew characteristics of a resultant gum product by, at least in part, increasing the oils and creating a base having a softening point that is lower than the softening point of a corresponding wax containing gum base. Preferably, the no wax gum base has a softening point that is at least 5°C lower than the gum base if it had included wax. In a preferred embodiment, the softening point is 10°C lower.

By way of example, and not limitation, taste results of gum created from commercial gum bases that have wax vis-a-vis chewing gum, created from gum bases that do not include wax pursuant to the present invention will now be given.

The testing was performed using a blind study protocol. One hundred fifty participants were used in each of the three studies. Fifty percent of the participants in each study had chewed the commercial (control) product as their regular preferred gum before the study and 50% of the participants had chewed the control gum at least once during the preceding week before the study.

During the study, each participant was given one of the two gum products to chew for 12 minutes. This was followed by a cleansing period of 6 minutes. The second product was then chewed for 12 minutes. During the study, half of the participants were given the control first and half the new product. The participants were asked for their preferences based on a number of criteria.

The results were as follows:

### EXAMPLE NO. 1A

In this example, the control chewing gum comprised: 25.2% of a gum base with wax; 48.45% sorbitol; 16.80% glycerine; 8.01 mannitol; 1.33% flavor; and .21% encapsulated aspartame.

The no wax chewing gum comprised: 25.2% of the gum base of the control modified pursuant to the present invention; 48.45% sorbitol; 16.80% glycerine; 8.01% mannitol; 1.33% flavor; and .21% encapsulated aspartame.

| PREFERENCES | | |
|---|---|---|
| | Prefer No Wax | Prefer Wax |
| | % | % |
| Overall Preference | 52 | 47 |
| Tastes Best | 52 | 46 |
| More Refreshing | 50 | 46 |
| Chewing Texture | 50 | 47 |
| Refreshing Breath | 55 | 40 |
| Long Lasting Taste | 52 | 41 |
| Better Spearmint Flavor | 49 | 48 |
| Better Appearance | 36 | 44 |
| Sweeter | 54 | 40 |
| Less Bitter | 44 | 45 |
| Softer | 79 | 16 |
| Better Smell | 38 | 51 |
| Stronger Flavor | 57 | 42 |
| Stuck More To Teeth | 31 | 31 |
| Rather Buy | 52 | 44 |

| FLAVOR OVERALL (1 MINUTE) | | |
|---|---|---|
| | No Wax | Wax |
| "Excellent" | 23% | 21% |

| STRENGTH OF FLAVOR (1 MINUTE) | | |
|---|---|---|
| | No Wax | Wax |
| "About Right" | 70% | 70% |

| FLAVOR OVERALL (12 MINUTES) | | |
|---|---|---|
| | No Wax | Wax |
| "Excellent" | 9% | 7% |

| STRENGTH OF FLAVOR (12 MINUTES) | | |
|---|---|---|
| | No Wax | Wax |
| "About Right" | 51% | 56% |

### EXAMPLE NO. 2A

In this example, the control chewing gum comprised: 25.16% base with wax; 48.38% sorbitol; 8.00% mannitol; 16.66% glycerine; 1.55% flavor; and 0.25% encapsulated aspartame.

The no wax chewing gum comprised: 25.16% of the base of the control modified pursuant to the present invention; 48.28% sorbitol; 8.00% mannitol; 16.66% glycerine; 1.65% flavor; and 0.25% encapsulated aspartame.

| PREFERENCES | | |
|---|---|---|
| | Prefer No Wax | Prefer Wax |
| | % | % |
| Overall Preference | 49 | 47 |
| Tastes Best | 47 | 50 |
| More Refreshing | 49 | 46 |
| Chewing Texture | 46 | 51 |
| Refreshing Breath | 46 | 48 |
| Longer Lasting Taste | 47 | 49 |
| Better Spearmint Flavor | 50 | 46 |
| Better Appearance | 39 | 39 |
| Sweeter | 44 | 47 |
| Less Bitter | 37 | 47 |
| Softer | 72 | 24 |
| Better Smell | 50 | 43 |
| Stronger Flavor | 53 | 44 |
| Stuck More To Teeth | 13 | 37 |
| Rather Buy | 48 | 48 |

| FLAVOR OVERALL (1 MINUTE) | | |
|---|---|---|
| | No Wax | Wax |
| "Excellent" | 22% | 17% |

| STRENGTH OF FLAVOR (1 MINUTE) | | |
|---|---|---|
| | No Wax | Wax |
| "About Right" | 64% | 65% |

| FLAVOR OVERALL (12 MINUTES) | | |
|---|---|---|
| | No Wax | Wax |
| "Excellent" | 11% | 7% |

| STRENGTH OF FLAVOR (12 MINUTES) | | |
|---|---|---|
| | No Wax | Wax |
| "About Right" | 48% | 47% |

### EXAMPLE NO. 3A

In this example, the control comprised: 20.6% base with wax; 57.63% sugar; 20.39% corn syrup; 0.83% glycerine; and 0.55% flavor. The no wax chewing gum comprised: 20.6% of the base of the control modified pursuant to the invention; 59.49% sugar; 18.5% corn syrup; 0.83% glycerine; and 0.58% flavor.

| PREFERENCES | | |
|---|---|---|
| | Prefer No Wax | Prefer Wax |
| | % | % |
| Overall Preference | 56 | 43 |
| Tastes Best | 53 | 44 |
| More Refreshing | 51 | 48 |
| Chewing Texture | 48 | 48 |
| Refreshing Breath | 51 | 45 |
| Longer Lasting Taste | 50 | 46 |
| Better Spearmint Flavor | 46 | 51 |
| Better Appearance | 45 | 38 |
| Sweeter | 40 | 55 |
| Less Bitter | 46 | 43 |
| Softer | 43 | 52 |
| Better Smell | 46 | 45 |
| Stronger Flavor | 46 | 52 |
| Stuck More to Teeth | 26 | 32 |
| Rather Buy | 51 | 45 |

### EXAMPLE NO. 3A

| FLAVOR OVERALL (1 MINUTE) | | |
|---|---|---|
| | No Wax | Wax |
| "Excellent" | 21% | 21% |

| STRENGTH OF FLAVOR (1 MINUTE) | | |
|---|---|---|
| | No Wax | Wax |
| "About Right" | 71% | 68% |

| FLAVOR OVERALL (12 MINUTES) | | |
|---|---|---|
| | No Wax | Wax |
| "Excellent" | 7% | 6% |

| STRENGTH OF FLAVOR (12 MINUTES) | | |
|---|---|---|
| | No Wax | Wax |
| "About Right" | 45% | 38% |

## Claims

1. A wax-free chewing gum base comprising:
from 20 to 60 wt% synthetic elastomer;
from 0 to 30 wt% natural elastomer;
from 5 to 55 wt% elastomer plasticizer;
from 4 to 35 wt% filler; and
from 5 to 35 wt% softener;
the softener comprising one or more hydrogenated or partially hydrogenated vegetable oil or a mixture thereof having a capillary melting point from 40°C to 70°C, the amount of said oil or mixture thereof being from 12 to 35 wt% based on the weight of the gum base.

2. A gum base as claimed in claim 1 wherein at least one vegetable oil is chosen from the group consisting of cottonseed oil, soybean oil, canola oil, safflower oil, sunflower oil, palm oil, coconut oil, or a mixture thereof.

3. A gum base as claimed in claim 1 or claim 2 wherein at least one vegetable oil is palm oil.

4. A gum base as claimed in any one of claims 1 to 3 wherein at least a majority of the vegetable oils are hydrogenated.

5. A gum base as claimed in any one of claims 1 to 4 wherein the base includes no more than approximately 10% by weight of the gum base, partially hydrogenated oil.

6. A gum base as claimed in any one of claims 1 to 5 wherein at least one vegetable oil has a capillary melting point from 60°C to 70°C.

7. A gum base as claimed in any one of claims 1 to 6 wherein the base includes a sufficient amount of hydrogenated or partially hydrogenated vegetable oil or mixture thereof to reduce the softening point of the gum base by at least 5°C as compared to a similar gum base having wax.

8. A gum base as claimed any one of claims 1 to 7 wherein the base includes a sufficient amount of the hydrogenated or partially hydrogenated vegetable oil or mixture thereof to achieve flavour release characteristics that are at least as good as a similar gum base that includes wax.

9. A gum base as claimed in any one of claims 1 to 8 wherein the elastomer comprises natural rubber.

10. A gum base as claimed in any previous claim wherein the elastomer comprises at least one synthetic elastomer selected from the group consisting of polyvinyl acetate, polyisobutylene, butadiene-styrene copolymer, vinyl acetate, vinyl laurate copolymer, polyisoprene, isobutylene-isoprene copolymer, and combinations thereof.

11. A gum base as claimed in any previous claim wherein the elastomer comprises at least one natural elastomer selected from the group consisting of jelutong, lechi caspi, perillo, sorva, massaranduba belata, massaranduba chocolate, nispero, rosindinha, chicle, gutta hang kang, smoked or liquid latex, guayule, and combinations thereof.

12. A gum base as claimed in any previous claim wherein the elastomer plasticizer is selected from the group consisting of glycerol esters or rosin, glycerol esters of partially hydrogenated rosin, glycerol esters of polymerized rosin, glycerol esters of partially dimerized rosin, partially hydrogenated methyl esters of rosin, pentaerythritol esters of rosin, methyl esters of rosin, pentaerythritol esters of partially hydrogenated rosin, terpene resin, and combinations thereof.

13. A gum base as claimed in any previous claim further comprising a filler selected from the group consisting of calcium carbonate, magnesium carbonate, talc, ground limestone, magnesium silicate, aluminum silicate, clay, alumina, titanium dioxide, mono-, di- and tri-calcium phosphates, cellulose, and combinations thereof.

14. A wax-free chewing gum comprising:
a water soluble bulking agent;
one or more flavouring agents; and
from 5 to 35 wt% of a water insoluble gum base as defined in any one of claim 1 to 13.

15. A method for eliminating wax from a gum base formula containing more than 5 wt% wax and at least one elastomer, elastomer solvent and softener comprising the steps of:
eliminating wax from the formula and including approximately proportionately an amount of at least one hydrogenated or partially hydrogenated vegetable oil or mixture thereof;
mixing the elastomer, elastomer solvent, softener and vegetable oil to form a base;
testing a resultant base; and
modifying the vegetable oil ratios and/or vegetable oil content of the resultant gum base to produce the desired characteristics of the resultant base, the amount of softener and vegetable oils in the resultant base being from 5 to 35 wt%.

16. A method as claimed in claim 15 wherein the vegetable oil ratios in the gum base are modified by selecting oils of different capillary melting points.

17. Use of one or more hydrogenated vegetable oils, partially hydrogenated vegetable oils or a mixture of hydrogenated and partially hydrogenated vegetable oils having melting points from 40°C to 70°C to provide improved flavour release characteristics in a wax free gum base, the amount of the vegetable oil/s in the base being from 12 to 35% by weight of the base.

18. Use of hydrogenated vegetable oil, partially hydrogenated vegetable oil or a mixture of hydrogenated and partially hydrogenated vegetable oils as a substitute for wax together with at least one natural elastomer in a chewing gum base containing at least one synthetic elastomer and from 5 to 35 wt% softener, including but not limited to vegetable oils, to produce a wax free gum base.

19. Use of hydrogenated palm oil, partially hydrogenated palm oil or a mixture of hydrogenated and partially hydrogenated palm oils as a substitute for wax together with at least one natural elastomer in a chewing gum base containing at least one synthetic elastomer and from 5 to 35wt% softener, including but not limited to vegetable oils, to produce a wax free gum base.

## Patentansprüche

1. Wachsfreie Kaugummibasis, umfassend:
von 20 bis 60 Gew.-% synthetisches Elastomer;
von 0 bis 30 Gew.-% natürliches Elastomer;
von 5 bis 55 Gew.-% Elastomerweichmacher;
von 4 bis 35 Gew.-% Füllstoff; und
von 5 bis 35 Gew.-% Erweichungsmittel;
wobei das Erweichungsmittel ein oder mehrere hydrierte oder teilweise hydrierte pflanzliche Öle oder eine Mischung davon umfasst, mit einem Kapillarschmelzpunkt von 40° C bis 70° C, wobei die Menge besagten Öls oder besagter Mischung davon von 12 bis 35 Gew.-% ausmacht, basierend auf dem Gewicht der Kaugummibasis.

2. Kaugummibasis nach Anspruch 1, wobei mindestens ein pflanzliches Öl ausgewählt ist aus der Gruppe bestehend aus Baumwollsamenöl, Sojabohnenöl, Kanolaöl, Safloröl, Sonnenblumenöl, Palmöl, Kokosnussöl oder einer Mischung daraus.

3. Kaugummibasis nach Anspruch 1 oder 2, wobei mindestens ein pflanzliches Öl Palmöl ist.

4. Kaugummibasis nach irgendeinem der Ansprüche 1 bis 3, wobei mindestens ein Hauptteil der pflanzlichen Öle hydriert ist.

5. Kaugummibasis nach irgendeinem der Ansprüche 1 bis 4, wobei die Basis nicht mehr als ungefähr 10 Gew.-% teilweise hydriertes Öl umfasst, basierend auf dem Gewicht der Kaugummibasis.

6. Kaugummibasis nach irgendeinem der Ansprüche 1 bis 5, wobei mindestens ein pflanzliches Öl einen Kapillarschmelzpunkt von 60° C bis 70° C aufweist.

7. Kaugummibasis nach irgendeinem der Ansprüche 1 bis 6, wobei die Basis eine ausreichende Menge eines hydrierten oder teilweise hydrierten pflanzlichen Öls oder einer Mischung davon umfasst, um den Erweichungspunkt der Kaugummibasis um mindestens 5° C zu reduzieren, verglichen mit einer ähnlichen Kaugummibasis mit einem Wachs.

8. Kaugummibasis nach irgendeinem der Ansprüche 1 bis 7, wobei die Basis eine ausreichende Menge des hydrierten oder teilweise hydrierten pflanzlichen Öls oder einer Mischung davon umfasst, um Geschmackfreisetzungseigenschaften zu erreichen, die mindestens ebenso gut sind, wie die einer Kaugummibasis, die ein Wachs umfasst.

9. Kaugummibasis nach irgendeinem der Ansprüche 1 bis 8, wobei das Elastomer Naturgummi umfasst.

10. Kaugummibasis nach irgendeinem der zuvor genannten Ansprüche, wobei das Elastomer mindestens ein synthetisches Elastomer umfasst, ausgewählt aus der Gruppe bestehend aus Polyvinylacetat, Polyisobutylen, Butadien-Styrol-Copolymer, Vinylacetat, Vinyllauratcopolymer, Polyisopren, lsobutylen-lsopren-Copolymer und Kombinationen daraus.

11. Kaugummibasis nach irgendeinem der zuvor genannten Ansprüche, wobei das Elastomer mindestens ein natürliches Elastomer umfasst, ausgewählt aus der Gruppe bestehend aus Jelutong, Lechi Caspi, Perillo, Sorva, Massaranduba Belata, Massaranduba Chocolate, Nispero, Rosindinha, Chicle, Gutta Hang Kang, geräucherten oder flüssigen Latex, Guayule und Kombinationen daraus.

12. Kaugummibasis nach irgendeinem der zuvor genannten Ansprüche, wobei der Elastomerweichmacher ausgewählt ist aus der Gruppe bestehend aus Glycerinestern des Kolophoniums, Glycerinestern von teilweise hydriertem Kolophonium, Glycerinester von polymerisiertem Kolophonium, Glycerinester von teilweise dimerisiertem Kolophonium, teilweise hydrierte Methylester von Kolophonium, Pentaerythritolester von Kolophonium, Methylester von Kolophonium, Pentaerythritolester von teilweise hydriertem Kolophonium, Terpenharze und Kombinationen davon.

13. Kaugummibasis nach irgendeinem der zuvor genannten Ansprüche, weiter umfassend einen Füllstoff, ausgewählt aus der Gruppe bestehend aus Calciumcarbonat, Magnesiumcarbonat, Talk, gemahlendem Kalkstein, Magnesiumsilikat, Aluminiumsilikat, Lehm, Alumina, Titandioxyd, Mono-, Di- und Tri-Calciumphosphate, Cellulose und Kombinationen davon.

14. Wachsfreies Kaugummi, umfassend:
ein wasserlösliches Füllmittel;
ein oder mehrere Geschmacksstoffe; und
von 5 bis 35 Gew.-% einer wasserunlöslichen Kaugummibasis, wie in irgendeinem der Ansprüche 1 bis 13 definiert.

15. Verfahren zur Eliminierung von Wachs aus einer Kaugummibasisformulierung, enthaltend mehr als 5 Gew.-% Wachs und mindestens ein Elatomer, ein Elastomerlösungsmittel und ein Erweichungsmittel, umfassend die folgenden Stufen:
Eliminieren des Waches aus der Formulierung und Einführen ungefähr einer proportionalen Menge mindestens eines hydrierten oder teilweise hydrierten pflanzlichen Öls oder einer Mischung daraus;
Mischen des Elastomeren, des Elastomerslösungsmittels, des Erweichungsmittels und des pflanzlichen Öls, um eine Basis zu formen;
Testen der resultierenden Basis; und
Modifizieren des Verhältnisses des pflanzlichen Öls und/oder des Gehalts an pflanzlichem Öl in der resultierenden Kaugummibasis, um die erwünschten Eigenschaften der resultierenden Basis zu ergeben, wobei die Menge an Erweichungsmittel und pflanzlichem Öl in der resultierenden Basis von 5 bis 35 Gew.-% beträgt.

16. Verfahren nach Anspruch 15, wobei die Verhältnisse des pflanzlichen Öls in der Kaugummibasis modifiziert werden durch die Auswahl an Ölen mit verschiedenen Kapillarschmelzpunkten.

17. Verwendung eines oder mehrerer hydrierter pflanzlicher Öle, teilweise hydrierter pflanzlicher Öle oder einer Mischung an hydrierten und teilweise hydrierten pflanzlichen Ölen, mit Schmelzpunkten von 40° C bis 70° C, um verbesserte Geschmacksfreisetzungseigenschaften in einer wachsfreien Kaugummibasis zur Verfügung zu stellen, wobei die Menge an pflanzlichem Öl/pflanzlichen Ölen in der Basis von 12 bis 35 Gew.-% beträgt, bezogen auf die Basis.

18. Verwendung von hydriertem pflanzlichen Öl, teilweise hydriertem pflanzlichen Öl oder einer Mischung an hydriertem und teilweise hydriertem pflanzlichen Öl als Ersatz für Wachs, zusammen mit mindestens einem natürlichen Elastomer in einer Kaugummibasis, enthaltend mindestens ein synthetisches Elastomer und von 5 bis 35 Gew.-% Erweichungsmittel, umfassend aber nicht beschränkt auf pflanzliche Öle, um eine wachsfreie Kaugummibasis herzustellen.

19. Verwendung von hydriertem Palmöl, teilweise hydriertem Palmöl oder einer Mischung von hydriertem und teilweise hydriertem Palmöl als Ersatz für Wachs, zusammen mit mindestens einem natürlichen Elastomer in einer Kaugummibasis, enthaltend mindestens ein synthetisches Elastomer und von 5 bis 35 Gew.-% Erweichungsmittel, umfassend aber nicht beschränkt auf pflanzliche Öle, um eine wachsfreie Kaugummibasis zu formen.

## Revendications

1. Base de gomme à mâcher, dépourvue de cire, comprenant :
20 à 60 % en poids d'un élastomère synthétique ;
0 à 30 % en poids d'un élastomère naturel ;
5 à 55 % en poids d'un plastifiant d'élastomère ;
4 à 35 % en poids d'une charge ; et
5 à 35 % en poids d'un agent ramollissant ;
l'agent ramollissant comprenant une ou plusieurs huiles végétales hydrogénées ou partiellement hydrogénées ou un de leurs mélanges ayant un point de fusion capillaire de 40°C à 70°C, la quantité de ladite huile ou dudit mélange de telles huiles étant comprise dans l'intervalle de 12 à 35 % en poids sur la base du poids de la base de gomme.

2. Base de gomme suivant la revendication 1, dans laquelle au moins une huile végétale est choisie dans le groupe consistant en l'huile de graines de cotonnier, l'huile de soja, l'huile de canola, l'huile de carthame, l'huile de tournesol, l'huile de palme, l'huile de coprah et un de leurs mélanges.

3. Base de gomme suivant la revendication 1 ou la revendication 2, dans laquelle au moins une huile végétale est l'huile de palme.

4. Base de gomme suivant l'une quelconque des revendications 1 à 3, dans laquelle au moins une proportion dominante des huiles végétales est hydrogénée.

5. Base de gomme suivant l'une quelconque des revendications 1 à 4, ladite base ne comprenant pas plus d'approximativement 10 % d'huile partiellement hydrogénée, en poids de la base de gomme.

6. Base de gomme suivant l'une quelconque des revendications 1 à 5, dans laquelle au moins une huile végétale a un point de fusion capillaire de 60°C à 70°C.

7. Base de gomme suivant l'une quelconque des revendications 1 à 6, ladite base comprenant une quantité suffisante d'une huile végétale hydrogénée ou partiellement hydrogénée ou d'un mélange de telles huiles pour baisser le point de ramollissement de la base de gomme d'au moins 5°C, comparativement à une base de gomme similaire renfermant une cire.

8. Base de gomme suivant l'une quelconque des revendications 1 à 7, ladite base comprenant une quantité suffisante de l'huile végétale hydrogénée ou partiellement hydrogénée ou d'un mélange de telles huiles pour parvenir à des caractéristiques de libération d'arôme qui sont au moins aussi bonnes que celles d'une base de gomme similaire qui comprend une cire.

9. Base de gomme suivant l'une quelconque des revendications 1 à 8, dans laquelle l'élastomère comprend le caoutchouc naturel.

10. Base de gomme suivant l'une quelconque des revendications précédentes, dans laquelle l'élastomère comprend au moins un élastomère synthétique choisi dans le groupe consistant en le poly(acétate de vinyle), le poly-isobutylène, un copolymère butadiène-styrène, un copolymère acétate de vinyle-laurate de vinyle, le polyisoprène, un copolymère isobutylène-isoprène et leurs associations.

11. Base de gomme suivant l'une quelconque des revendications précédentes, dans laquelle l'élastomère comprend au moins un élastomère naturel choisi dans le groupe consistant en jelutong, lechi caspi, perillo, sorva, massaranduba balata, massaranduba chocolate, nispero, rosindinha, chicle, gutta hang kang, latex fumé ou liquide, guayule et leurs associations.

12. Base de gomme suivant l'une quelconque des revendications précédentes, dans laquelle le plastifiant d'élastomère est choisi dans le groupe consistant en des esters de glycérol de colophane, des esters de glycérol de colophane partiellement hydrogénée, des esters de glycérol de colophane polymérisée, des esters de glycérol de colophane partiellement dimérisée, des esters méthyliques partiellement hydrogénés de colophane, des esters de pentaérythritol de colophane, des esters méthyliques de colophane, des esters de pentaérythritol de colophane hydrogénée, une résine terpénique et leurs associations.

13. Base de gomme suivant l'une quelconque des revendications précédentes, comprenant en outre une charge choisie dans le groupe consistant en le carbonate de calcium, le carbonate de magnésium, le talc, la chaux broyée, le silicate de magnésium, le silicate d'aluminium, une argile, l'alumine, le dioxyde de titane, les phosphates mono-, di- et tri-calciques, la cellulose et leurs associations.

14. Gomme à mâcher dépourvue de cire comprenant :
un agent d'accroissement de volume hydrosoluble ;
un ou plusieurs agents aromatisants ; et
5 à 35 % en poids d'une base de gomme insoluble dans l'eau répondant à la définition suivant l'une quelconque des revendications 1 à 13.

15. Procédé pour éliminer la cire d'une formulation de base de gomme contenant plus de 5 % en poids de cire et au moins un élastomère, un solvant d'élastomère et un agent ramollissant, comprenant les étapes consistant :
à éliminer la cire de la formulation et à incorporer une quantité approximativement proportionnelle d'au moins une huile végétale hydrogénée ou partiellement hydrogénée ou d'un mélange de telles huiles ;
à mélanger l'élastomère, le solvant d'élastomère, l'agent ramollissant et l'huile végétale pour former une base ;
à tester la base résultante ; et
à modifier les rapports des huiles végétales et/ou la teneur en huile végétale de la base de gomme résultante pour produire les caractéristiques désirées de la base résultante, la quantité d'agent ramollissant et d'huiles végétales dans la base résultante étant comprise dans l'intervalle de 5 à 35 % en poids.

16. Procédé suivant la revendication 15, dans lequel les rapports des huiles végétales dans la base de gomme sont modifiés en choisissant des huiles ayant des points de fusion capillaires différents.

17. Utilisation d'une ou plusieurs huiles végétales hydrogénées, huiles végétales partiellement hydrogénées ou d'un mélange d'huiles végétales hydrogénées et partiellement hydrogénées ayant des points de fusion compris dans l'intervalle de 40°C à 70°C pour conférer des caractéristiques de libération d'arôme améliorées à une base de gomme dépourvue de cire, la quantité de la ou des huiles végétales dans la base étant comprise dans l'intervalle de 12 à 35 % en poids de la base.

18. Utilisation d'une huile végétale hydrogénée, d'une huile végétale partiellement hydrogénée ou d'un mélange d'huiles végétales hydrogénées et partiellement hydrogénées en remplacement de la cire conjointement avec au moins un élastomère naturel dans une base de gomme à mâcher contenant au moins un élastomère synthétique et 5 à 35 % en poids d'un agent ramollissant comprenant, mais à titre non limitatif, des huiles végétales, pour produire une base de gomme dépourvue de cire.

19. Utilisation d'huile de palme hydrogénée, d'huile de palme partiellement hydrogénée ou d'un mélange d'huiles de palme hydrogénées et partiellement hydrogénées en remplacement de la cire conjointement avec au moins un élastomère naturel dans une base de gomme à mâcher contenant au moins un élastomère synthétique et 5 à 35 % en poids d'un agent ramollissant, comprenant, mais non à titre non limitatif, des huiles végétales, pour produire une base de gomme dépourvue de cire.
